(19)

Europäisches
Patentamt
European
Patent Office
Office européen
des brevets

(11) **EP 1 975 859 A2**

(12) **EUROPEAN PATENT APPLICATION**

(43) Date of publication:
**01.10.2008 Bulletin 2008/40**

(51) Int Cl.:
***G06N 3/12*** *(2006.01)*

(21) Application number: **08152929.9**

(22) Date of filing: **18.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.03.2007 EP 07105372**

(71) Applicant: **Honda Research Institute Europe GmbH**
**63073 Offenbach/Main (DE)**

(72) Inventors:
• **Dr. Jin, Yaochu**
**63110, Rodgau (DE)**

• **Zhou, Aimin**
**Colchester, Essex CO1 2JF (GB)**
• **Zhang, Qingfu**
**Colchester, CO7 9RP (GB)**
• **Dr. Sendhoff, Bernhard**
**63486, Bruchköbel (DE)**

(74) Representative: **Rupp, Christian**
**Mitscherlich & Partner**
**Patent- und Rechtsanwälte**
**Sonnenstrasse 33**
**80331 München (DE)**

(54) **Method and system for continuous multi-objective optimization of designs**

(57) According to the invention, a method for multi-objective optimization of a design comprises the steps:
providing an initial population;
selecting some evenly distributed reference points from the population;
generating randomly, for each reference point, a neighbourhood from the population,
building a probability model based on points from the neighbourhood;
generating a next population by sampling points from the probability model characterized in that
the size of the neighbourhood is adaptively adjusted.

Fig. 1

EP 1 975 859 A2

**Description**

The present invention relates to a method and a system for continuous multi-objective optimization of designs. A typical application of the invention is the optimisation of aerodynamic or hydrodynamic bodies.

TECHNICAL BACKGROUND AND PRIOR ART

With respect to the invention, "optimisation of a design" is understood as the following process:

- an initial body to be optimized is provided in encoded form (spline encoding, CAD data, etc.),
- an optimisation computer program generates an optimised encoded representation of the body which, if materialised, yields a physical body optimized with respect to at least one physical parameter, and
- data are provided (and may be output) representing the optimized body and constituting a building plan for building the optimized body in the real world. The building may be done automatically when the encoded representation is available, e.g. as CAD data which may be directly fed into a CAD milling machine, for example.

Multi-objective optimization refers to the fact that multiple physical parameters are to be optimized simultaneously, e.g. weight, tensile strength, drag, etc.

The invention considers continuous multi-objective optimization problems (MOPs). Mathematically, a continuous MOP may be defined as follows:

$$\text{minimize } F(x) = (f_1(x), f_2(x), \ldots, f_m(x))^T \qquad (1)$$
$$\text{subject to } x \in X$$

where $X \subset R^n$ is the decision space and $x = (x_1, \ldots, x_n)^T \in R^n$ is the decision variable vector. $F : X \to R^m$ consists of $m$ real-valued continuous objective functions $f_i(x)$ $(i = 1, 2, \ldots, m) \in R^m$ is the objective space.

In the optimisation of aerodynamic or hydrodynamic bodies, the objective function represents the body being subject to optimization, such as a rotor blade. The inputs to the objective function may represent relevant parameters of the body's design, e.g. geometric properties such as curvature. The outputs of the objective function may represent the physical properties of the design, with respect to which the design object is to be optimised. Within this framework, a wing's curvature (input) may be adapted to yield minimal lift-to-drag ratio (output).

Under certain smoothness conditions, the Pareto Set of a continuous MOP is an $(m - 1)$-dimensional manifold [11]. However, such regularity has rarely been exploited in multiobjective evolutionary algorithms [6]. Very recently, several methods based on this regularity property have been proposed for dealing with continuous MOPs with variable linkages [7], [13], [15]. Local principal component analysis (LPCA) [8] and generative topographic mapping (GTM) [1] are utilized in our methods for modelling the distribution of promising search areas in the decision space.

Experimental studies have shown that these methods are able to deal with MOPs with variable linkages. However, LPCA and GTM are computationally rather expensive, particularly, when the MOP has many decision variables. Besides, the number of clusters must be pre-defined in the LPCA based approach.

It is therefore an object of the invention to provide a method and a system for multi-objective optimisation of physical designs that is computationally efficient.

SUMMARY OF THE INVENTION

This object is achieved by a method and a system according to the independent claims. Advantageous embodiments are defined in the dependent claims.

The invention introduces simple yet effective modelling strategy. It builds a number of local models in the search space. The neighbourhood size of each local model is adjusted during the search according to a new proposed convergence criterion, which measures the progress of the algorithm. This strategy provides a natural way for balancing exploitation and exploration.

SHORT DESCRIPTION OF THE FIGURES

These and further aspects and advantages of the present invention will become clearer when considering the following detailed description of exemplary embodiments of the invention in connection with the annexed drawing in which

Fig. 1    shows a flowchart of a method according to one embodiment of the invention;

Fig. 2    illustrates how neighbourhood control may be effected in one embodiment of the invention; and

Fig. 3    is an illustration of model building according to one embodiment of the invention.

DETAILED DESCRIPTION

According to the invention, piecewise linear models may be used to approximate the Pareto Set and the major difference from the LPCA based method, i.e. RM-MEDA [13], is on how to select some points to build a model. In the invention, an adaptive method is used and the basic idea is as follows: in each step, firstly some evenly distributed reference points are selected from the population; secondly for each reference point, a neighbourhood is randomly generated from the population, and those which are close to the reference point are chosen out to build a model.
The invention is characterized in that the size of a neighbourhood is adaptively adjusted by a convergence criterion which measures the progress of the algorithm. Since in the proposed method, models are built adaptively, it may be called an adaptive model based multi-objective estimation of distribution algorithm (AM-MEDA).

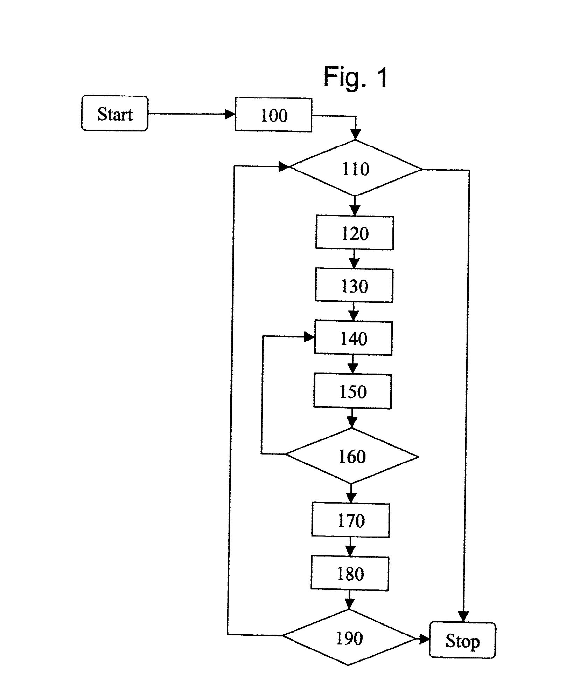

**Figure 1** shows a flowchart of a method according to one embodiment of the invention. The following notation will be used in describing the method:

$P_t$        population set with size N in generation t.
$Q_t$        offspring set in generation t.
N        size of $P_t$ and $Q_t$ (algorithm parameter).
$N^P$        number of points to build a model (algorithm parameter).
$N^I$        number of reference points, $N^I = N/N^P$.
$N_t^C$        size of neighborhood in generation t.
T        maximal number of generations (algorithm parameter).

The individual steps of the method are as follows:

/* Initialization */

**Step 100**    Set t := 0. Generate and evaluate an initial population $P_0$.
**Step 110**    If stopping condition is met, stop and return the non-dominated solutions in $P_t$.

/* Model Building */

**Step 120**    Select a set of reference points $\{x_i^I, i = 1,...,N^I\}$ from $P_t$, set k := 1.
**Step 130**    Update the size of neighbourhood, $N_t^C$.
**Step 140**    Randomly select $N_t^C$ candidate points from current population to form a neighbourhood and choose the $N^P$ closest to $x_k^I$ out.
**Step 150**    Build a probability model on the selected $x_k^I$ points in the above step.
**Step 160**    Set k :=k+1,if k <$N^I$ go to Step 140.

/* Model Sampling */

**Step 170**    Generate offspring set $Q_t$ from the models and evaluate $Q_t$.

/* Selection */

**Step 180**    Select N individuals from $Q_t \cup P_t$ to create $P_{t+1}$.
**Step 190**    Set t := t + 1 and go to Step 100.

The algorithm shall now be described in more detail. In Step 100, the population is randomly initialized. In Step 110, the stopping condition is controlled by the maximal number of generations.
In Step 120 and Step 180, the MaxiMin sorting scheme [12] is used to select an even distributed subset of points from a set. In MaxiMin sorting scheme, the candidate set is firstly sorted according to the rank values as the non-dominated sorting scheme [2]. Instead of using crowded distance to sort points with same rank value, the MaxiMin scheme uses the following process: firstly the m (number of objectives) extreme points are selected into a subset, then the point which has the maximal distance to the subset (the distance is measured as the minimal Euclidean distance from the point to all points in the subset) will be selected into the subset, the process repeats until all points with the same rank value are processed and the selected order is the sorting order. The advantages of this scheme are: (1) the time complexity of the process is O(MN) where N is the population size and M the size of selected points; (2) the extreme points and the points in sparse regions are emphasized. More details on this scheme may be found in [12].

With regard to the handling of boundaries, suppose the search space is X = [$x_i^1$, $x_i^u$]$^n$, i = 1,..., n. The newly created solution is x*. All offspring may be made feasible by

$$ x_i^* = \begin{cases} x_i^* & x_i^* \in \left[ x_i^l, x_i^u \right] \\ \frac{1}{2}(x_i + x_i^l) & x_i^* < x_i^l \\ \frac{1}{2}(x_i + x_i^u) & x_i^* > x_i^u \end{cases} $$

where i = 1,..., n and x is randomly selected from the current population $P_t$.

The method may further comprise the step of outputting the optimized result and using it for providing or building an optimized aerodynamic or hydrodynamic design, e.g. a turbine.

The mating strategy and offspring reproduction will be discussed in more detail in the following.

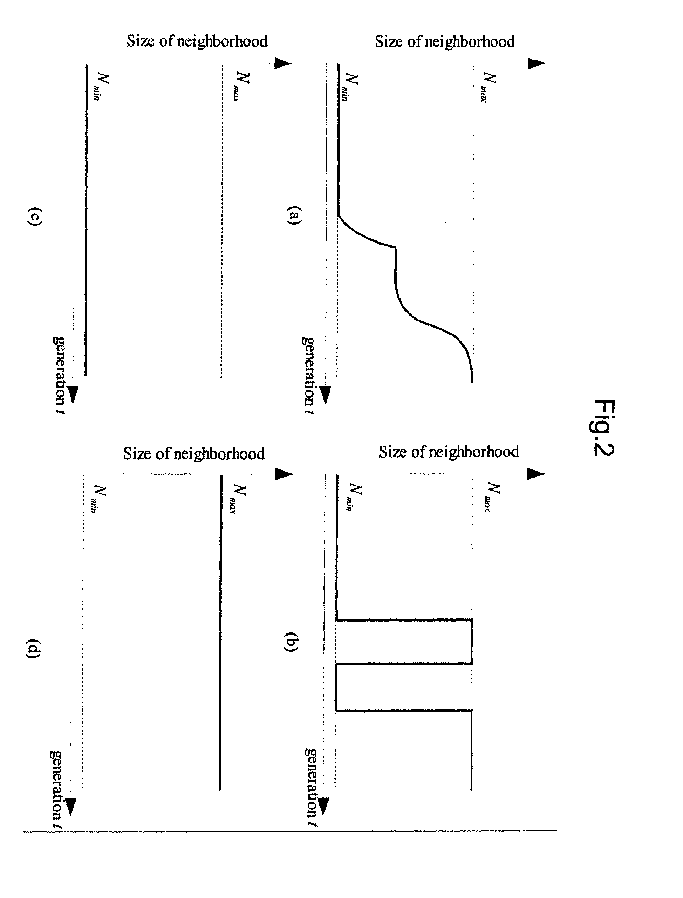

Figure 2 illustrates how neighbourhood control may be effected in one embodiment of the invention.

In [14], a convergence criterion is proposed to measure the convergence of a cluster and genetics or model based generator are applied adaptively according to the convergence criterion. Here, the dynamics of evolution are further considered and therefore, a convergence criterion is introduced to test the change of a population. The proposed convergence criterion may be defined as:

$$ C(P_t) = \begin{cases} +\infty & t < \Delta t \\ \frac{D(P_t, P_{t-\Delta t})}{\Delta t} & t \geq \Delta t \end{cases} \qquad (2) $$

wherein the term

$$ D(P_{t_1}, P_{t_2}) = \frac{1}{\|P_{t_1}\|} \sum_{x \in P_{t_1}} \min_{y \in P_{t_2}} \|\vec{F}(x) - \vec{F}(y)\|_2 $$

measures the distance from population $P_{t1}$ to population $P_{t2}$, $\Delta t$ is the size of test window and $\Delta t = 10$. By equation (2), one may say that a population converges, if C(Pt) < $\varepsilon$ where $\varepsilon$ is a predefined algorithm parameter.

With convergence test (2), one may further control the size of neighborhood, $N_t^C$, at generation t. One may restrict $N_t^C \in [N_{min}, N_{max}]$ where $N_{min} = N^P$ and $N_{max} = N - N^P$ are the minimal and maximal size respectively.

From the method steps shown above in connection with figure 1, one may see that

1. if $N_t^C = N_{min}$, the models will be built on some randomly selected points which represent the current population statistically and
2. on the contrary if $N_t^C = N_{max}$, to select some points, the whole population will be considered and thus the models will represent the local information of the population.

As shown in figure 2, at least four neighbourhood control strategies by convergence criterion may be considered in various embodiments of the invention:

1) Adaptive Neighbourhood (S1)

The basic idea of this strategy is to increase the size of neighborhood adaptively as follows:

$$N_t^{C'} = \begin{cases} N_{t_k}^{C'} & C(P_t) > \varepsilon \\ N_{t_k}^{C'} + \dfrac{N_{max} - N_{t_k}}{1 + exp[-15(t/T + \alpha)]} & C(P_t) \le \varepsilon \end{cases} \quad (3)$$

where $t_k$, k = 0, 1, ⋯are some change points, i.e for all $t \in [t_k-1, t_k)$, C(Pt) > ε and C(Pt) ≤ε when t = $t_k$. T is the maximal generation and

$$\alpha = \frac{1}{4} + \frac{3t_k}{4T}$$

In (3), when $C(P_t) \le \varepsilon$ and t = $t_k$ +¼ (T - $T_k$), $N_t^C$ = $N_{tk}^C$ + ½ ($N_{max}$ - $N_{tk}$).

As illustrated in Fig. 2(a), the size of neighbourhood keeps stable until C(Pt) ≤ ε and then the size will increase until C(Pt) > ε.

By utilizing this strategy, at the beginning, the size of neighbourhood is small and thus each model will represent the whole population while at the end, on the contrary each model will represent a part of the population but all models will hopefully approximate the population. The size of neighbourhood increases by the convergence criterion and exploration and exploitation may be balanced adaptively.

2) Alternative Neighbourhood (S2)

As shown in Fig. 2(b), in this strategy two sizes, $N_{min}$ and $N_{max}$, may be utilized alternatively.

$$N_t^C = \begin{cases} N_{min} & C(P_t) > \varepsilon \\ N_{max} & C(P_t) \le \varepsilon \end{cases} \quad (4)$$

where $0 < t \le T$.

The main characteristic of this strategy is that, if the population converges, i.e. $C(P_t) \le \varepsilon$, the algorithm turns to do exploitation, and on the other hand if the population does not converge, i.e. C(Pt) > ε, the algorithm turns to do exploration.

3) Minimum Neighborhood (S3)

As shown in Fig. 2(c), there is no restriction on the size of the neighbourhood which is fixed as:

$$N_t^C = N_{min} \quad (5)$$

where $0 < t \le T$. In this case, the algorithm keeps on exploration in the evolution.

4) Maximum Neighbourhood (S4)

As shown in Fig. 2(d), the size of the neighbourhood always keeps maximal as:

$$N_t^C = N_{max} \quad (6)$$

where $0 < t \le T$. In this case, the algorithm keeps on exploitation in the evolution.

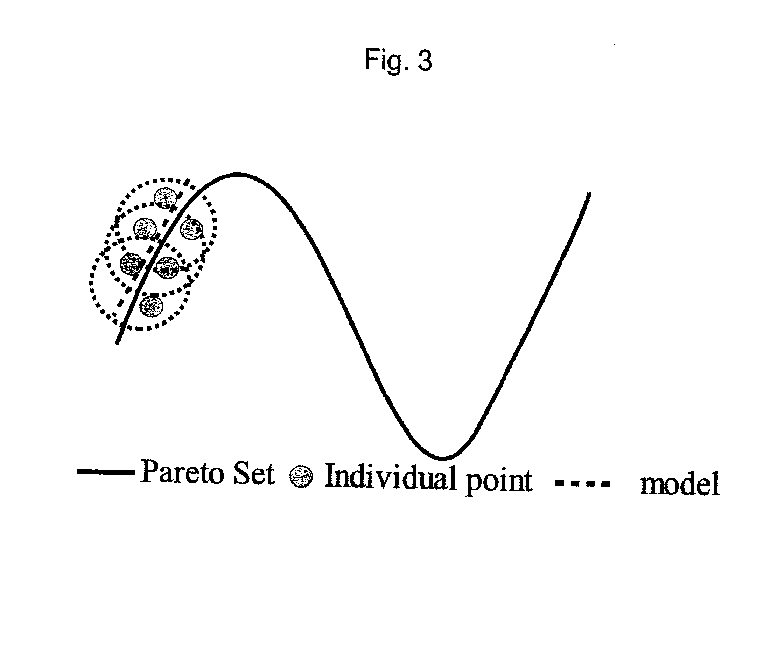

Figure 3 is an illustration of model building according to one embodiment of the invention. Without loss of generality, one may suppose the selected points near to reference point $x_k$ are $S_k$ = {$x_1^k$ ,..., $x_{NP}^k$}, k = 1,...,$N^l$. The mean of $S_k$ is

$$\bar{x}^k = \frac{1}{N^P} \sum_{x \in S^k} x.$$

The covariance matrix of $S_k$ is

$$Cov^k = \frac{1}{N^P - 1} \sum_{y \in S^k} (y - \bar{x}^k)(y - \bar{x}^k)^{T}.$$

The i-th principal component $v_i^k$ is a unity eigenvector associated with the i-th largest eigenvalue $\lambda_i^k$ of the matrix $Cov^k$.

As shown in Fig. 3, a linear model with Gaussian noise, denoted as $A_k$, is built as follows.

$$x = \bar{x}^k + \sum_{i=1}^{m-1} s_i \nu_i^k + \varepsilon^k \qquad (7)$$

where $s_i \in \left[ s_i^{k,min}, s_i^{k,max} \right]$, $\left[ s_i^{k,min}, s_i^{k,max} \right]$ is the range of projection in $i$th eigenvector, and

$$s_i^{k,min} = \min_{x \in S^k} (x - \bar{x}^k)^T \nu_i^k$$

$$s_i^{k,max} = \max_{x \in S^k} (x - \bar{x}^k)^T \nu_i^k,$$

$\varepsilon^k$ is a noise vector with mean 0 and variance $\delta^k$, i.e $\varepsilon^k \sim N(0, \delta^k I)$, $I$ is an identity matrix and $\delta^k = \frac{1}{n-m+1} \sum_{i=m}^{n} \lambda_i^k$.

When sampling new trial solutions, a model is chosen according to the evenness of a model.

$$P(A^k) = \frac{evenness(S^k)}{\sum_{i=1}^{NI} evenness(S^k)} \qquad (8)$$

where evenness($S^k$) denotes the evenness of model $A_k$ and it is calculated as the average density of solutions in $S^k$,

$$evenness(S^k) = \frac{1}{N^P} \sum_{x \in S^k} density(x)$$

where density(x) denotes the density of a solution x and it is estimated as the second minimal distance to x in $P_t$.

In the reproduction, the search space is extended by 50% along the manifold. As discussed in previous work [13], the reason is the population may not cover the whole Pareto Set, by extension the algorithm can explore more ranges.

The reproduction process may be set up as follows:

**Reproduction by Sampling**

**Step 0** Set $Q_t = \phi$.
**Step 1** Randomly select a model $A^k$ by (8).
**Step 2** Randomly generate

$$s_i \in [s_i^{k,min} - 0.25(s_i^{k,max} - s_i^{k,min}), s_i^{k,max} + 0.25(s_i^{k,max} - s_i^{k,min})], \quad i = 1, \cdots, m - 1.$$

**Step 3** Generate a noise vector $\varepsilon^k \sim N(0, \delta^k I)$.
**Step 4** Get a new trial solution $x$ by (7) and let $Q_t = Q_t \cup \{x\}$.
**Step 5** Go to **Step 1** if $|Q_t| < N$.

CONCLUSIONS

The invention proposes a multi-objective estimation of distribution algorithm in which an adaptive modelling technique is utilized by considering the dynamics of evolution. A convergence criterion is introduced to test the dynamics of the population and this criterion is further used to adjust the neighbourhoods of the reference points. In such a way, each model is built based on the information studied from the population adaptively and the exploration and exploitation is thus balanced dynamically.

However, in the described method, the number of models used is still fixed. As the next step, one may use a convergence criterion to adapt the number of models in addition to the neighbourhood size. In other words

1. The number of models may be adjustable during the optimization using a convergence criterion. This number may then determine the number of index points or the number of clusters. Note that for each cluster or each index point, a model may be built. In this way, the number of models may be adaptive.
2. If index points are used for building the models, individuals in the neighbourhood of the index point may be used to build the model. The size of the neighbourhood may also be adapted using a convergence criterion as discussed above.
3. The convergence criterion may further be used to adjust the number of reference points, thus also the number of models.

The convergence criterion may be a measurement of how "converged" the individuals are in the population. Candidates for such a convergence criterion may be the ratio between the largest and the second largest values, or the distance between the non-dominated fronts of the population of generation (t-k) and generation t, t means the current generation, and k>0 is the offset

References

[1] Christopher M. Bishop, Markus Svens'en, and Christopher K. I. Williams. GTM:the generative topographic mapping. Neural Computation, 10(1):215-234, 1998.

[2] Kalyanmoy Deb. Multi-Objective Optimization using Evolutionary Algorithms. John Wiley & Sons, LTD, Baffins Lane, Chichester, 2001.

[3] Kalyanmoy Deb, Amrit Pratap, Sameer Agarwal, and T. Meyarivan. A fast and elitist multiobjective genetic algorithm: NSGA-II. IEEE Transactions on Evolutionary Computation, 6(2):182-197, 2002.

[4] Kalyanmoy Deb, Ankur Sinha, and Saku Kukkonen. Multi-Objective Test Problems, Linkages, and Evolutionary Methodologies. In Maarten Keijzer et al., editor, 2006 Genetic and Evolutionary Computation Conference (GECCO 2006), volume 2, pages 1141-1148, Seattle, Washington, USA, July 2006. ACM Press.

[5] Kalyanmoy Deb, Lothar Thiele, Marco Laumanns, and Eckart Zitzler. Scalable Test Problems for Evolutionary Multiobjective Optimization. In Ajith Abraham, Lakhmi Jain, and Robert Goldberg, editors, Evolutionary Multiobjective Optimization. Theoretical Advances and Applications, pages 105-145. Springer, USA, 2005.

[6] Yaochu Jin and Bernhard Sendhoff. Connectedness, regularity and the success of local search in evolutionary multi-objective optimization. In Proceedings of the Congress on Evolutionary Computation (CEC 2003), pages 1910-1917, Canberra, Australia, December 2003. IEEE Press.

[7] Yaochu Jin, Aimin Zhou, Qingfu Zhang, Bernhard Sendhoff, and Edward Tsang. Modeling regularity to improve scalability of model-based multiobjective optimization algorithms. In Multi-Objective Problem Solving From Nature: From Concepts to Applications. Springer, 2007. to appear.

[8] Nandakishore Kambhatla and Todd K. Leen. Dimension reduction by local principal component analysis. Neural Computation, 9(7):1493-1516, October 1997.

[9] Saku Kukkonen and Jouni Lampinen. GDE3: The third evolution step of generalized differential evolution. In Proceedings of the Congress on Evolutionary Computation (CEC 2005), pages 443-450, Edinburgh, U.K, September 2005. IEEE Press.

[10] Hui Li and Qingfu Zhang. A multiobjective differential evolution based on decomposition for multiobjective optimization with variable linkages. In Parallel Problem Solving from Nature (PPSN IX), volume 4193 of Lecture Notes in Computer Science, pages 583-592, Reykjavik, Iceland, 2006. Springer.

[11] Kaisa Miettinen. Nonlinear Multiobjective Optimization, volume 12 of Kluwer's International Series in Operations Research & Management Science. Kluwer Academic Publishers, 1999.

[12] E J Solteiro Pires, J A Tenreiro Machado, and P B de Moura Oliveira. Multi-objective MaxiMin sorting scheme. In Carlos A. Coello Coello, Arturo Hern'andez Aguirre, and Eckart Zitzler, editors, Third International Conference on Evolutionary Multi-Criterion Optimization (EMO 2005), volume 3410 of Lecture Notes in Computer Science, pages 165-175, Guanajuato, Mexico, March 2005. Springer.

[13] Qingfu Zhang, Aimin Zhou, and Yaochu Jin. Modelling the regularity in estimation of distribution algorithm for continuous multi-objective evolutionary optimization with variable linkages. IEEE Transactions on Evolutionary Computation, 2007. accepted for publication.

[14] Aimin Zhou, Yaochu Jin, Qingfu Zhang, Bernhard Sendhoff, and Edward Tsang. Combining model-based and genetics-based offspring generation for multi-objective optimization using a convergence criterion. In Proceedings of the Congress on Evolutionary Computation (CEC 2006), pages 3234-3241, Vancouver, BC, Canada, July 2006. IEEE Press.

[15] Aimin Zhou, Qingfu Zhang, Yaochu Jin, Edward Tsang, and Tatsuya Okabe. A model-based evolutionary algorithm for bi-objective optimization. In Proceedings of the Congress on Evolutionary Computation (CEC 2005), pages 2568-2575, Edinburgh, U.K, September 2005. IEEE Press.

## Claims

1. Method for multi-objective optimization of a physical body, comprising the steps:

encoding an initial body,
providing an initial population comprised of random variations of the parameter set encoding the initial body;
selecting some evenly distributed reference points from the population;
generating randomly, for each reference point, a neighbourhood from the population,
building a probability model based on points from the neighbourhood;
generating a next population by sampling points from the probability model and
continuing the cycle until a termination criterion is met;
outputting a signal representing the optimised physical body in encoded form;
**characterized in that**
the size of the neighbourhood is adaptively adjusted during the course of the optimization cycles.

2.  Method according to claim 1, wherein
the initial population is provided by random initialization.

3.  Method according to claim 1, wherein
the MaxiMin sorting scheme is used for selecting the set of reference points.

4.  Method according to claim 1, wherein
the size of the neighbourhood is adaptively adjusted based on the convergence of the population.

5.  Method according to claim 4, wherein
the convergence of the population is calculated based on the change of the population.

6.  Method according to claim 5, wherein
the size of the neighbourhood is only increased if the convergence is smaller than or equal to a predetermined threshold value.

7.  Method according to claim 5, wherein
the size of the neighbourhood is minimal if the convergence is smaller than a predetermined threshold value and maximal otherwise.

8.  Method according to claim 5, wherein
the size of the neighbourhood is always minimal.

9.  Method according to claim 5, wherein
the size of the neighbourhood is always maximal.

10. Method according to claim 1, wherein
the probabilistic model is a linear model with Gaussian noise.

11. Method according to claim 1, wherein
the number of reference points is adjusted based on a convergence criterion.

12. Computer program product, comprising instructions that, when executed on a computer, implement a method according to claims 1 to 11.

13. System, comprising
means for providing an initial population;
means for selecting some evenly distributed reference points from the population;
means for generating randomly, for each reference point, a neighbourhood from the population,
means for building a probability model based on points which are close to the reference point;
means for generating a next population by sampling points from the probability model and
means for adaptively adjusting the size of the neighbourhood.

Fig. 1

Size of neighborhood

$N_{max}$

$N_{min}$

(a)

generation $t$

Size of neighborhood

$N_{min}$

$N_{max}$

(c)

generation $t$

Size of neighborhood

$N_{max}$

$N_{min}$

(b)

generation $t$

Size of neighborhood

$N_{min}$

$N_{max}$

(d)

generation $t$

Fig.2

Fig. 3

— Pareto Set ⬤ Individual point ▪▪▪▪ model

EP 1 975 859 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHRISTOPHER M. BISHOP ; MARKUS SVENS'EN ; CHRISTOPHER K. I. WILLIAMS.** GTM:the generative topographic mapping. *Neural Computation,* 1998, vol. 10 (1), 215-234
- **KALYANMOY DEB.** Multi-Objective Optimization using Evolutionary Algorithms. John Wiley & Sons, LTD, 2001
- **KALYANMOY DEB ; AMRIT PRATAP ; SAMEER AGARWAL ; T. MEYARIVAN.** A fast and elitist multiobjective genetic algorithm: NSGA-II. *IEEE Transactions on Evolutionary Computation,* 2002, vol. 6 (2), 182-197
- Multi-Objective Test Problems, Linkages, and Evolutionary Methodologies. **KALYANMOY DEB ; ANKUR SINHA ; SAKU KUKKONEN et al.** Genetic and Evolutionary Computation Conference (GECCO 2006. ACM Press, July 2006, vol. 2, 1141-1148
- Scalable Test Problems for Evolutionary Multiobjective Optimization. In Ajith Abraham, Lakhmi Jain, and Robert Goldberg, editors, Evolutionary Multiobjective Optimization. **KALYANMOY DEB ; LOTHAR THIELE ; MARCO LAUMANNS ; ECKART ZITZLER.** Theoretical Advances and Applications. Springer, 2005, 105-145
- **YAOCHU JIN ; BERNHARD SENDHOFF.** Connectedness, regularity and the success of local search in evolutionary multi-objective optimization. *In Proceedings of the Congress on Evolutionary Computation (CEC 2003,* 1910-1917
- Modeling regularity to improve scalability of model-based multiobjective optimization algorithms. **YAOCHU JIN ; AIMIN ZHOU ; QINGFU ZHANG ; BERNHARD SENDHOFF ; EDWARD TSANG.** In Multi-Objective Problem Solving From Nature: From Concepts to Applications. Springer, 2007
- **NANDAKISHORE KAMBHATLA ; TODD K. LEEN.** Dimension reduction by local principal component analysis. *Neural Computation,* October 1997, vol. 9 (7), 1493-1516

- GDE3: The third evolution step of generalized differential evolution. **SAKU KUKKONEN ; JOUNI LAMPINEN.** Proceedings of the Congress on Evolutionary Computation (CEC 2005. IEEE Press, 2005, 443-450
- A multiobjective differential evolution based on decomposition for multiobjective optimization with variable linkages. **HUI LI ; QINGFU ZHANG.** Parallel Problem Solving from Nature (PPSN IX), volume 4193 of Lecture Notes in Computer Science. Springer, 2006, vol. 4193, 583-592
- Nonlinear Multiobjective Optimization. **KAISA MIETTINEN.** Kluwer's International Series in Operations Research & Management Science. Kluwer Academic Publishers, 1999, vol. 12
- Multi-objective MaxiMin sorting scheme. **E J SOLTEIRO PIRES ; J A TENREIRO MACHADO ; P B DE MOURA OLIVEIRA.** Third International Conference on Evolutionary Multi-Criterion Optimization (EMO 2005), volume 3410 of Lecture Notes in Computer Science. Springer, March 2005, vol. 3410, 165-175
- **QINGFU ZHANG ; AIMIN ZHOU ; YAOCHU JIN.** Modelling the regularity in estimation of distribution algorithm for continuous multi-objective evolutionary optimization with variable linkages. *IEEE Transactions on Evolutionary Computation,* 2007
- Combining model-based and genetics-based offspring generation for multi-objective optimization using a convergence criterion. **AIMIN ZHOU ; YAOCHU JIN ; QINGFU ZHANG ; BERNHARD SENDHOFF ; EDWARD TSANG.** In Proceedings of the Congress on Evolutionary Computation (CEC 2006. IEEE Press, July 2006, 3234-3241
- A model-based evolutionary algorithm for bi-objective optimization. **AIMIN ZHOU ; QINGFU ZHANG ; YAOCHU JIN ; EDWARD TSANG ; TATSUYA OKABE.** In Proceedings of the Congress on Evolutionary Computation (CEC 2005. IEEE Press, September 2005, 2568-2575